(19) Europäisches Patentamt
European Patent Office
Office européen des brevets

(11) **EP 4 610 786 A1**

(12) **EUROPEAN PATENT APPLICATION**

(43) Date of publication:
**03.09.2025 Bulletin 2025/36**

(21) Application number: **24159990.1**

(22) Date of filing: **27.02.2024**

(51) International Patent Classification (IPC):
**G06F 3/01** (2006.01)   **G06T 19/00** (2011.01)

(52) Cooperative Patent Classification (CPC):
**G06F 3/011; G06T 19/006**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **KASIBOTLA, Phanindra**
  **Bangalore, Karnataka 560100 (IN)**
• **KUNDU, Ricktam**
  **New Delhi, Delhi 110045 (IN)**
• **RAJ, Arun**
  **Hosur, Tamil Nadu 635110 (IN)**
• **SINGH, Himanshu Kumar**
  **Bangalore, Karnataka 560100 (IN)**

(74) Representative: **HKW Intellectual Property PartG mbB**
**Theresienhöhe 12**
**80339 München (DE)**

(54) **METHOD AND SYSTEM FOR PLACING AND VISUALIZING SHARED ASSETS IN THE INDUSTRIAL ENVIRONMENT**

(57)  Disclosed is a method (100) and a system (200) for a creating phase and a viewing phase of a virtual position anchor. The step of creating phase further comprises of receiving, by a processor, an instruction to generate the virtual position anchor at a virtual position that is globally fixed near a real-time object, receiving, by the processor, sensor data from a user device relating to the virtual position anchor, calculating, by the processor, the virtual position based on the sensor data received from the user device, and placing, by the processor, the virtual position anchor at the virtual position near the real-time object.

FIG 2

**Description**

The present invention relates generally to the field of collaborative industrial environment, and specifically to methods and systems for managing shared assets in the collaborative industrial environment.

The industrial metaverse represents a network of interconnected 3D virtual worlds designed for collaborative interactions between users and machines. This digital ecosystem serves as a shared space, enabling individuals or groups to engage and collaborate seamlessly. Anchoring, a crucial aspect of collaborative work, permits multiple users to visualize and interact with the same object concurrently within a shared physical space.

This collaborative experience is facilitated through augmented reality (AR) devices, where users with such devices share their experiences over the internet. However, the current state-of-the-art technologies face a challenge related to the creation and location of anchors. The existing approach relies on capturing visual data from the surrounding environment. The captured visual data is then converted into a unique and fixed-size string of characters generated from the data that serves as a digital fingerprint for the original data. The digital fingerprint is structured or organized in the form of a collection of data points in a three-dimensional coordinate system to place the anchor. However, when the environment changes, the digital fingerprint of the visual data also changes and therefore it becomes difficult to locate the anchor. Notably, a significant drawback emerges in scenarios where the background environment undergoes even minor changes as such alterations can render the background unrecognizable, posing difficulties in locating previously established anchors.

This challenge becomes particularly pronounced in dynamic environments, such as open areas, city landscapes, and exhibition centers, where constant changes in the surroundings hinder effective anchoring of objects. Addressing this limitation in anchor stability is crucial for enhancing the robustness and applicability of collaborative experiences within the industrial metaverse.

In light of the above, there exists a need for a method for placing interactive objects in the industrial metaverse without relying on the background environment. Therefore, it is an object of the present invention to provide a method and system for placing and visualizing shared assets in the industrial metaverse using location and sensor data.

Therefore, the object of the present invention is achieved by a method for generating a virtual position anchor for a real-time object within an augmented reality environment or a computer simulated environment as disclosed herein.

The method comprises of a creating phase of a virtual position anchor. The step of creating phase further comprises receiving, by a processor, an instruction to generate the virtual position anchor at a virtual position that is globally fixed near a real-time object, receiving, by the processor, sensor data from a user device relating to the virtual position anchor, calculating, by the processor, the virtual position based on the sensor data received from the user device, and placing, by the processor, the virtual position anchor at the virtual position near the real-time object.

The step further comprises, in the creating phase, storing, in a database, the virtual position of the virtual position anchor. The virtual position anchor may also be called a virtual anchor. The step further comprises calculating the virtual position near a real-time object using a spherical law of cosines using the data relating to the virtual position from the user device.

Throughout the present invention, the term "industrial environment" may refer to plurality of industrial assets connected with each other to achieve a function. The industrial environment may be comprised of industrial assets such as industrial machines, industrial devices, industrial controllers, and so forth.

Throughout the present invention, the term "virtual position anchor" may refer to a virtual object in the form of a hologram projection (also called holo-projection). The virtual object may be integrated into the user's real-world environment or presented within a completely digital setting for example, but not limited to, a metaverse environment.

Throughout the present invention, the term "virtual position" may refer to a digital reference point used in augmented reality (AR) or virtual reality (VR) applications to establish a fixed location in a virtual environment, aligning it with the real world. It serves as a marker or point of reference for positioning virtual objects in relation to the physical surroundings.

Throughout the present invention, the term "computed simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via a user device, e.g., a virtual reality (VR) or augmented reality (AR) device. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of a plurality of digital twins corresponding to real-world one or more assets in the industrial environment.

Advantageously, the method removes the restriction of having the same background point cloud for locating an anchor. Thereby enabling the collaboration in evolving environments.

The method further comprises, in a creating phase, storing, in a memory unit, the virtual position anchor using the virtual position. Thereby, resulting in reduced storage and transmission as point cloud is unnecessary.

The method further comprises, in the creating phase, the data from the user device relating to the virtual position anchor comprises of a GPS location of the user device, a cardinal bearing and a depth information from at least one of the sensors of the user device. The data relating to the data from the user device is used to calculate the virtual position near a real-time object using a spherical law of cosines. The virtual position near the real-time object is calculated using a latitude parameter $\varphi_1$ and a longitude parameter $\lambda_1$ of the position of the user device, a distance to the virtual position d, radius of the earth R and a bearing angle $\theta$, the virtual position being the geo-coordinates.

Advantageously, the method supports the use of alternative location identifiers such as building ID, name, or famous locations, as long as GPS coordinates are available. This flexibility allows for applications in both indoor and outdoor settings, with examples like using a QR code or building name to store the GPS location.

The method further comprising the geo-coordinates of the virtual position that comprise of a target latitude parameter and a target longitude parameter. This can be particularly useful in situations where the orientation of the anchor can impact its effectiveness. The virtual position anchor may further comprise of an additional information associated with the real-time object.

The method comprises of a viewing phase. Further, the step of viewing phase comprises the step of transmitting, by a processor, first display data to a first display device comprising the display configured to overlay digital information onto the user's view of the physical world, the first display data causing the first display device to display the one or more holo-projection to the first user at the virtual position anchor at the virtual location of the real time object, and transmitting, by a processor, second display data to cause a second display device to display the one or more holo-projection to the second user at the virtual position anchor at the virtual location of the real time object.

Advantageously, the method results in enabling the creation and location of the anchor from all angles (and directions) and with multiple devices in a collaborative environment. This enables anchor detection from all angles while minimizing storage and transmission requirements by eliminating the need for point cloud data.

The method further comprises, in the viewing phase, an orientation of the virtual position anchor is configured to be changed based on an orientation input by one of a first user using a first device or a second user using a second device. This can be beneficial in easily locating the faults via the anchors without having to rely on non-intuitive maps. Hence an offline collaborative environment with specific goals may created to monitor, maintain, and repair.

The object of the invention is also achieved by a computer program product comprising machine readable instructions, that when executed by one or more processing units, cause the one or more processing units to perform the aforementioned method steps. The computer program product further comprises a memory unit communicatively coupled to the one or more processing units. The memory unit comprises a module stored in the form of machine-readable instructions executable by the one or more processing units. The module is configured to perform method steps as described above. The execution of the module may also be performed using co-processors such as Graphical Processing Unit (GPU), Field Programmable Gate Array (FPGA) or Neural Processing/Compute Engines.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:

FIG 1 is a flowchart of a method for placing and visualizing Shared Assets in the Industrial Environment, in accordance with one or more embodiments of the present invention;

FIG 2 is a block diagram representation of a system for placing and visualizing Shared Assets in the Industrial Environment, in accordance with one or more embodiments of the present invention;

FIG 3 is a depiction of a prior art as known in the field;

FIG 4 is a depiction of Spherical Law of cosines to calculate the anchor latitude and Longitude, in accordance with one or more embodiments of the present invention;

FIG 5 is a depiction of a consistent orientation with multiple devices, in accordance with one or more embodiments of the present invention;

FIG 6 is a depiction of one of the applications of the method described for placing and visualizing Shared Assets in the Industrial Environment, in accordance with one or more embodiments of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

The present invention discloses a novel method of placing and visualization of shared assets in the industrial metaverse. To place an object, an anchor is created and located without an environmental object. This removes the restriction of having the same background point cloud for locating an anchor. The proposed invention stores the anchor information with the geographical metadata such as location coordinates and cardinal direction. The calculation of the coordinates is achieved by using multiple devices, each of the multiple devices having a geo-positioning system (GPS). Advantageously, the proposed system does not require a point cloud from the background environment. It uses multiple mobile sensors for calculating the GPS location (latitude and longitude) of the placed anchor.

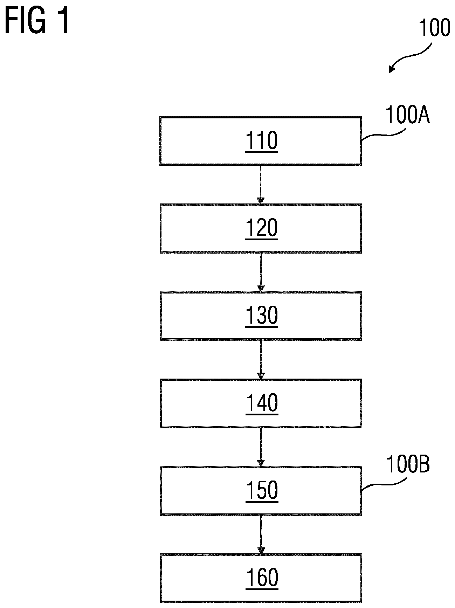

Referring now to FIG 1, illustrated is a flowchart of a method (as represented by reference numeral 100) for placing and visualization of shared assets in the industrial metaverse, in accordance with an embodiment of the present invention. As used herein, "industrial environment" refers to the operational setting or context within which industrial processes and activities occur. This may include generating a virtual position anchor for a real time object. The method 100 may include a creating phase 100a of the virtual position anchor. In the present invention, the virtual position anchor may be a specific point in a virtual environment that is used as a reference for placing or anchoring digital objects that a user may see in a real time. For example, if you're using an AR device, for example AR glasses, to view a real time object in the physical world, the virtual position anchor would help determine where that object appears in relation with the computer simulated surroundings. The virtual position anchor may be used to establish a reference point for positioning and orientation in a digital representation of a physical space.

As discussed, the present invention involves receiving an instruction to generate the virtual position anchor at a virtual position that is globally fixed near a real time object. Further, sensor data from a user device relating to the virtual position anchor is received. Based on the user input and the sensor data from the user device virtual position of the virtual position anchor is calculated. The calculated virtual position is used to generate one or more holo-projections based on the user input. In a viewing phase of the virtual position anchor, first display data is transmitted to a first display device comprising the display configured to overlay the digital information onto a user's view of the physical world. The first display data causes the first display device to display the one or more hollow projection to the first user at a virtual position anchor add the virtual location of the real time object.

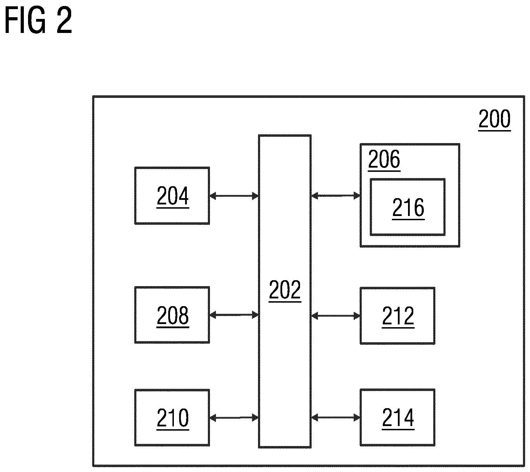

Referring to FIG 2, illustrated is a block diagram of a system 200 for generating a virtual position anchor for a real-time object, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages. By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, an exceptionally long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include a user device 208, such as a communication device (with the said terms being interchangeably used) which may enable the test suite management system 200 to communicate with other systems for receiving and transmitting information. The communication device 208 may include a medium (e.g., a communication channel) through which the system 200 communicates with other system. Examples of the communication device 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication device 208 may include one or more of a wired connection, a wireless network, cellular networks such as 2G, 3G, 4G, 5G mobile networks, and a Zigbee connection.

The system 200 also includes a memory unit 210. As used herein, the memory unit 210 is an organized collection of structured data, typically stored in a computer system and designed to be easily accessed, managed, and updated. The memory unit 210 may be in form of a central repository of information that can be queried, analysed, and processed to support various applications and business processes. In the system 200, the memory unit 210 provides mechanisms for storing, retrieving, updating, and deleting data, and typically includes features such as data validation, security, backup and recovery, and data modelling. The memory unit 210 stores multiple locations that are generated by the said process. Here, each location is mapped to multiple devices which are authenticated automatically based on distance from the virtual anchor. The memory unit 210 keeps growing over a period of time as new locations and user authentication are stored in the memory unit 210.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. It is to be understood that, when reference is made in the present invention to the term "display" this refers generically either to a display screen on its own or to the screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for visualizing the shared assets in an industrial environment. In particular, the memory 206 includes a location management unit 216 to perform steps for managing the location of the virtual position anchor. Also, in the system 200, the memory 206 may be configured to store the data associated with or generated by the execution of the inventive steps.

Referring to FIG. 1 and FIG. 2 in combination, the various steps of the method 100 as described hereinafter may be executed in the system 200, or specifically in the processor 204 of the system 200, for generating a virtual position anchor for a real-time object. For purposes of the present invention, generating a virtual position anchor the present method 100 is embodied as an algorithm for creating and locating/viewing the virtual position anchor at a virtual position based on a calculation. It may be appreciated that although the method 100 is illustrated and described as a sequence of steps, it may be contemplated that various embodiments of the method 100 may be performed in any order or a combination and need not include all of the illustrated steps.

In embodiments of the present invention, at step 101, the method 100 includes receiving a user input to generate the virtual position anchor at a virtual position that is globally fixed near a real-time object. The user input may include one or more inputs. The user input may be a location already existing in the memory unit 204. A user may choose to interact with one or more of the virtual position anchors appearing within the user's field of view. As used herein, the term "interact" encompasses both physical interaction and verbal interaction of a user with a virtual object. Physical interaction includes a user performing a predefined gesture using his or her fingers, hand, head and/or other body part(s) recognized by the mixed reality system as a user-request for the system to perform a predefined action. For example, the virtual position is globally fixed near a real time object time may be a digitally established point in a virtual or computer-generated environment that is consistently associated with a specific location near a real-time object. Real-time object, in association with the present invention, may refer to an object or entity in the physical or digital world that is actively monitored, tracked, or interacted with in real-time without noticeable delay. In various embodiments, "real-time" implies that information or actions related to the object are processed, updated, or responded to instantaneously as events occur.

In embodiments of the present invention, at step 102, the method 100 includes receiving sensor data from a user device relating to the virtual position anchor. The sensor data from the user device may refer to accelerometer data, gyroscope data, magnetometer data, GPS (global positioning system, proximity sensor data, light sensor data, barometer data, touch or capacitive sensor data, camera data, microphone data, and biometric sensor data. The sensor data may be gathered from one or more user devices.

In embodiments of the present invention, at step 103, the method 100 includes calculating the virtual position based on the user input and the sensor data received from the user device. The calculation of the virtual position near the real-time object is calculated using a latitude parameter " $\varphi_1$ and a longitude parameter $\lambda_1$ of the position of the user device, a distance to the virtual position, and a bearing angle. The virtual position of the virtual position anchor comprises of a target latitude parameter $\varphi_2$ and a target longitude parameter $\lambda_2$. The latitude $\varphi_1$ and longitude $\lambda_1$ parameters are derived from GPS sensor, the cardinal bearing from mobile device to locate an anchor is calculated from compass (Magnetometer), and the distance between the mobile device to the anchor is calculated using a depth camera using ray casting technique. The calculation in detail is mentioned later in the present invention.

In embodiments of the present invention, at step 104, the method 100 includes generating a virtual position anchor that is a holo-projection of a virtual object at the calculated virtual position. The virtual position anchor may also include for example but not limited to a digital or computer-generated point or marker in a virtual environment that serves as a fixed reference location. The virtual anchor is used to position or anchor digital content, objects, or information within the virtual space. The purpose of a virtual anchor may be to establish a stable point of reference, allowing for consistent placement and alignment of virtual elements, even as the user moves or interacts within the virtual environment. The virtual position anchor may be positional anchor, marker-based anchor, surface anchors, geospatial anchors, biometric anchors or any other forms of anchors that may be stored in the memory unit with its orientation and alignment which may be changed user any user device having access to the virtual position anchor. Here, it may be noted that though the explanation is provided with respect to a single virtual anchor, the use may generate triple virtual anchors for one real time object and the same maybe visible to the second user sharing the data relating to the same real time object.

After the creation of the virtual anchor a second user sharing the digital space may access the real time object using the virtual anchor. In an embodiment of the present invention at step 105 of 100b, i.e. in the viewing phase, includes transmitting first display data to a first display device. The first display data comprises a display of the holo-projection of a virtual object overlay digital information onto the user's view of the physical world, the first display data causing the first display device to display the one or more holo-projection to the first user at the virtual position anchor at the virtual location of the real time object.

In embodiments of the present invention, at step 106, the method 100 includes transmitting, by a processor (204), second display data to cause a second display device to display the one or more holo-projection to the second user at the virtual position anchor at the virtual location of the real time object. Here, once the second user selects the appropriate real time object, the virtual object at the virtual anchor fixed at the virtual position is displayed based on the distance of the second user from the virtual anchor. There may be a small deviation due to the standard calculation error. However, the displayed virtual object in the form of the holo-projection may be able to change the orientation based on the user input or may be pre-configured to change the orientation based on the direction of the user device.

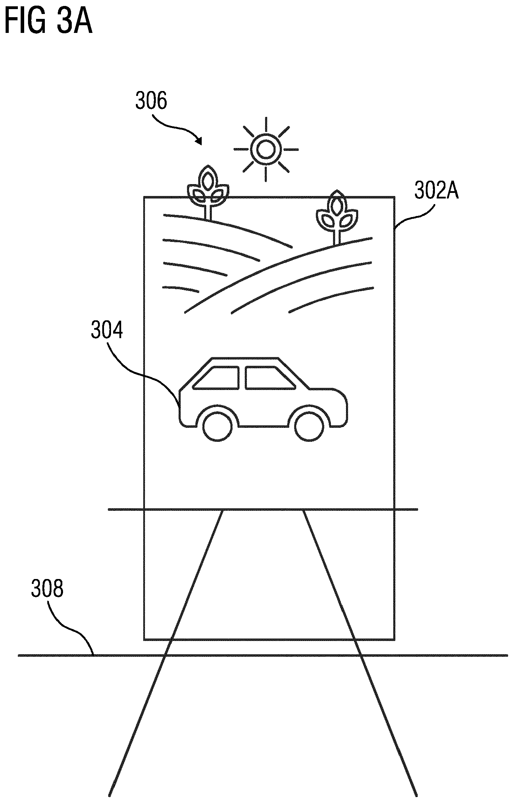

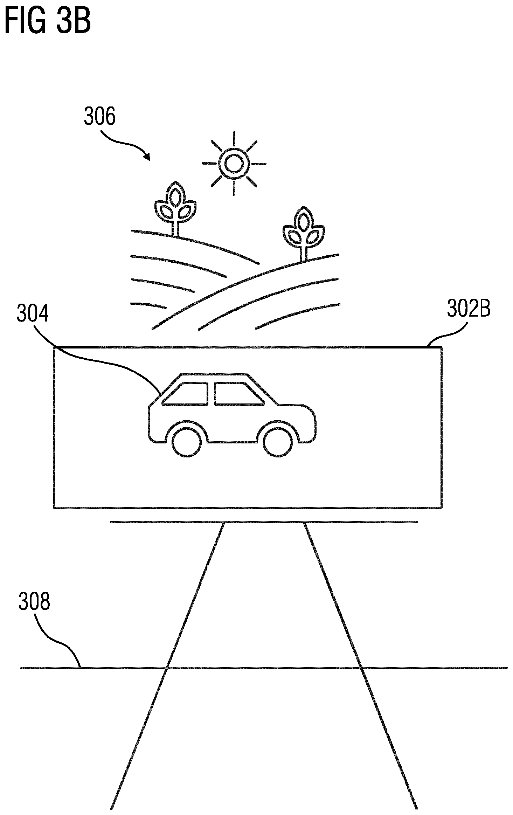

FIG 3 is an exemplary depiction of one of the prior art. Referring to the FIG. 3, in the existing state-of-the-art technologies, the creation or location of an anchor relies on the surrounding objects in the background environment. Visual data is stored as a hash in a sparse point cloud, like in the Azure cloud. The current method involves creating anchors with respect to the nearby environmental objects visible in one frame and storing them in a point cloud, requiring a match for subsequent location. With changes in the background, as shown from the Figure 3a to Figure 3b, such as movements in exhibitions or shifts in open areas, disrupt this matching process, leading to the failure of object rendering. Therefore, a significant drawback arises that even minor changes in the environment can render the background unrecognizable, thereby posing challenges in locating previously created anchors. The changes may be due to the changes in the nearby objects or due to the change in the device with which the anchor is being accessed as shown in the figure 3A with a first device 302A encompassing a different background with respect to the target object 304. However, the target object 304, if seen with a second device 302B, is seen with a different background not comprising of the background objects 306 and 308. Hence, it becomes difficult to anchor the object 304 correctly to be accessed by multiple devices with the same background. This becomes particularly problematic in dynamic settings such as open areas, city landscapes, industrial environment with consistent movements, and exhibition centres where constant changes hinder effective object anchoring.

This present invention introduces a technique for positioning interactive objects within the industrial metaverse independently of the background environment, fostering collaboration in dynamic settings. Anchoring an object involves creating and locating the anchor without relying on an environmental object, eliminating the constraint of requiring an identical background point cloud for anchor location.

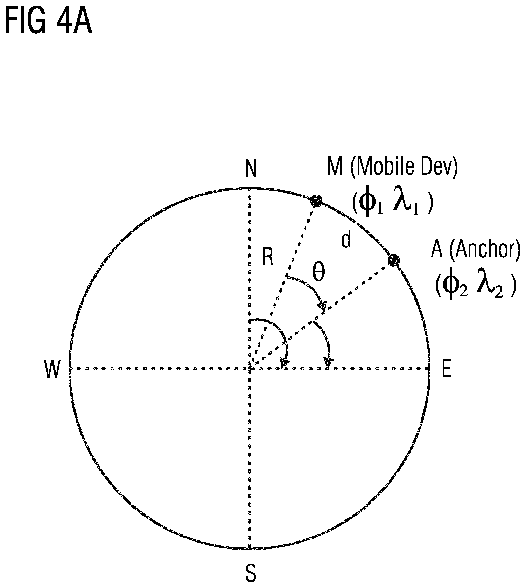

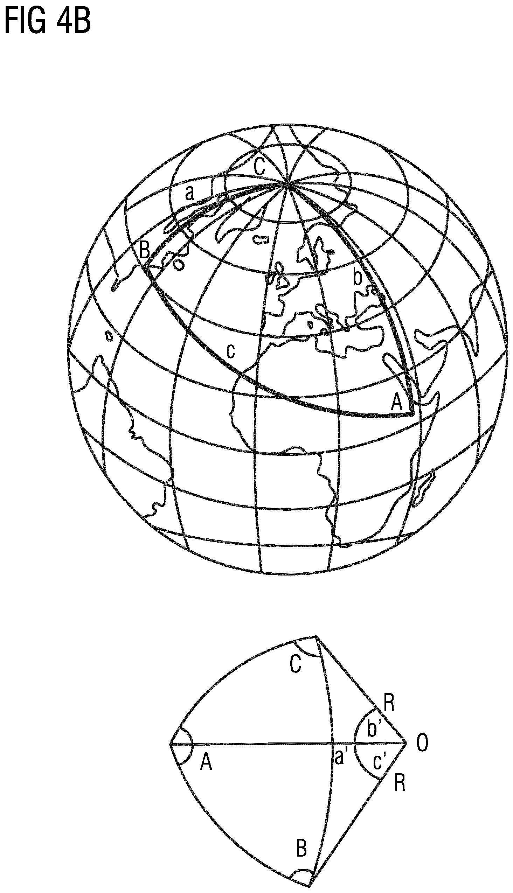

Figure 4 depicts the diagrams involved in the calculation of the virtual anchor using the Spherical law of cosines. The proposed method operates independently of a background environment point cloud. It employs multiple mobile sensors to calculate the GPS location (latitude and longitude) of a designated anchor. Utilizing the GPS sensor, the mobile device's compass provides the cardinal bearing, while the distance to the anchor is computed using a depth camera and a ray casting technique.

In the detailed mathematical exposition below, we present a comprehensive methodology tailored for accurate location coordinate computation of each anchor. Although the ideal method involves placing a GPS device precisely at the anchor's location, practical considerations in mixed reality lead to object placement from devices slightly offset from the actual location. The proposed methodology is grounded in this practical approach, utilizing a device in proximity to the anchor for its location determination.

By using Spherical Law of cosine, the anchor latitude and anchor longitude (also called target latitude and target longitude respectively) may be calculated. The simple spherical law of cosines ($\cos c = \cos a \cos b + \sin a \sin b \cos C$) gives well-conditioned results down to distances as small as a few meters on the earth's surface. As per Law of cosines:

$$d = \mathrm{acos}(\sin \varphi_1 \cdot \sin \varphi_2 + \cos \varphi_1 \cdot \cos \varphi_2 \cdot \cos \Delta\lambda) \cdot R$$

Wherein, "$\varphi$" refers to Latitude in radians, "$\lambda$" refers to Longitude in radians, and "R" refers to Radius of Earth (mean R= 6371Km)

The spherical law of cosine may be deduced to calculate the target longitude and latitude based on current longitude/latitude parameter from the user device, distance to virtual position, and bearing angle. For example, the longitude/latitude of a point on earth is given, and the goal is calculating the longitude/latitude of a point that is located away from the start point. Here is the formula:

$$\varphi_2 = \mathrm{asin}(\, \sin \varphi_1 \cdot \cos \delta + \cos \varphi_1 \cdot \sin \delta \cdot \cos \theta \,)$$

$$\lambda_2 = \lambda_1 + \mathrm{atan2}(\, \sin \theta \cdot \sin \delta \cdot \cos \varphi_1,\ \cos \delta - \sin \varphi_1 \cdot \sin \varphi_2 \,)$$

"$\varphi$" referring to Latitude in radians, "$\lambda$" referring to Longitude in radians, "$\theta$" referring to Bearing angle, and $\delta$: d/R

As the start point $(\varphi_1, \lambda_1)$, bearing angle $\theta$, radius r, distance d is already known, the target latitude and longitude may be computed.

Considering bearing angle "$\theta$" and "$\emptyset_1$" & "$\emptyset_2$" angle between north pole and the point then according to the spherical law of cosines may be determined using the below mentioned mathematical expression:

$$\cos \emptyset_2 = \cos \emptyset_1 . \cos \delta + \sin \emptyset_1 . \sin \delta . \cos \theta$$

Considering

$$\emptyset_i = \pi/2 - \varphi_i$$

$$\cos \theta = \frac{\sin \varphi_2 - \sin \varphi_1}{\cos \varphi_1 . \sin \delta} \quad (1)$$

$$\cos \Delta\lambda = \frac{\cos \delta - \sin \varphi_1 . \sin \varphi_2}{\cos \varphi_1 . \cos \varphi_2} \quad (2)$$

$$\tan \theta = \frac{\sin \Delta\lambda . \cos \varphi_2}{\cos \varphi_1 . \sin \varphi_2 - \sin \varphi_1 . \cos \varphi_2 \cos \Delta\lambda} \quad (3)$$

Using equation (2) and (3):

$$\sin \theta (\cos \varphi_1 . \sin \varphi_2 - \sin \varphi_1 . \cos \varphi_2 . \cos \Delta\lambda) = \sin \Delta\lambda . \cos \varphi_2 . \cos \theta$$

Using equation (1) and (3):

$$\sin \Delta\lambda = \frac{\sin \theta . \sin \delta}{\cos \varphi_2} \quad (4)$$

Using equation (2) and (4):

$$\lambda_2 = \lambda_1 + \mathrm{atan2}(\, \sin \theta \cdot \sin \delta \cdot \cos \varphi_1,\ \cos \delta - \sin \varphi_1 \cdot \sin \varphi_2 \,) \quad (5)$$

The above derived formula from equation (5) is used to calculate the longitude of the anchor in radians using longitude, bearing and distance from the device. And latitude of the anchor can be calculated using equation (1).

A sample calculation is depicted in Table 1 below. It shows how the position of an anchor (latitude and longitude) can be calculated using a device located nearby.

Table 1: Anchor Latitude/Longitude calculation based on available sensor data

| Device Latitude | Device Longitude | Cardinal Direction | Device to Anchor Distance | Anchor Latitude | Anchor Longitude |
|---|---|---|---|---|---|
| Available in the Mobile Device using GPS | Available in the Mobile Device using GPS | Available in the Mobile Device using Compass (Magnetometer) | Available in the Mobile Device using Depth Camera | To be Calculated | To be Calculated |
| 53°19'14"N | 001°43'47"W | 096°01'18" | 10 meters | 53° 19' 14" N | 001° 43' 46" W |

However, such an approach may be limited by technological constraints. GPS systems are sensitive to noise and distortions. These distortions and noises could be Gaussian noise, background noise, or low signal strength. Likewise, a magnetometer is sensitive to misalignment, and sensitivity, so a better calibration might be needed for proper navigation. Kalman filtering could be used as a filtering technique for increasing the SNR (signal-to-noise ratio) and calibrating the magnetometer for better accuracy. It enhances the error recognition rate in our system and provides one of the optimal smoothing algorithms.

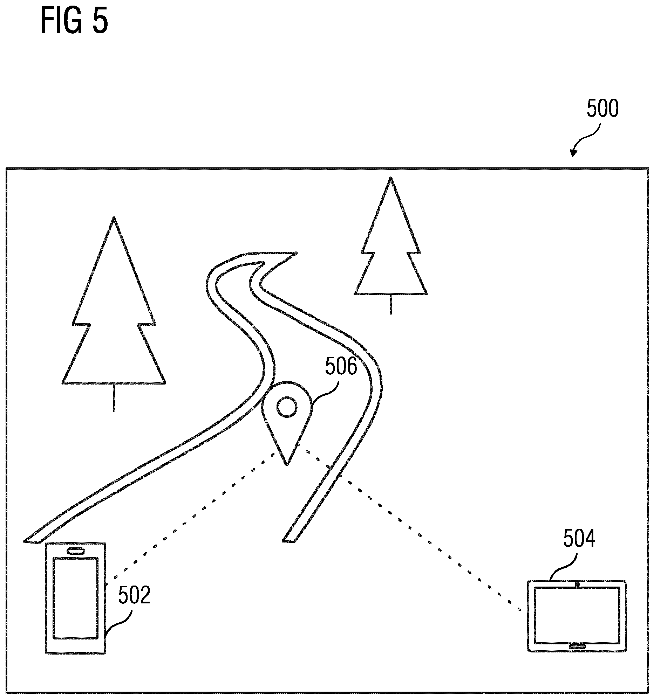

Figure 5 exemplifies the invention via an example to depicts the orientation and alignment of the virtual anchor 506 with respect to two devices in a use case. As shown in the figure 5, we may consider two devices: first device 502 places the anchor and captures the GPS of placed anchor, and second device 504 fetches/views the anchor from the placed GPS coordinate and displays it in AR view. From the table 1 and according to the spherical law of cosine, the device latitude, longitude, cardinal bearing, and the device to anchor distance are required to calculate the anchor latitude and longitude. When first device 502 places an anchor, it provides the required details using in-device sensors (GPS, magnetometer, depth camera, etc.), and based on the sensor data, the algorithm calculates and stores the GPS for the placed anchor. Similarly, based on the sensor data of second device 504 it will calculate the anchor GPS and fetch the matched data from the database.

By using a specific cardinal direction as a reference point, the first user placing the anchor can ensure that it is positioned in a consistent orientation. This may be particularly important in situations where the orientation of the anchor can impact its effectiveness. When retrieving the anchor, the same cardinal direction can be used to ensure that it is retrieved in the same orientation as it was placed. For example, if an HMI panel faces north, it always faces north for all users. If a user views it from the south, he/she will see the back of the panel. However, the user still may be able to retrieve the anchor.

The methods proposed results in enabling the creation and location of the anchor from all angles (and directions) and with multiple devices in a collaborative environment. Additionally, the users can update the placed anchor which will enhance the immersive experience. The accessibility to the anchor may also be tied to a form of authentication, such that only the relevant workers are able to access a particular anchor.

The proposed system above may be used in sectors like manufacturing industries for site inspection, outdoor mines, service industries, refineries, power generation sectors, historical places, museums, smart city, and guided tours, etc.

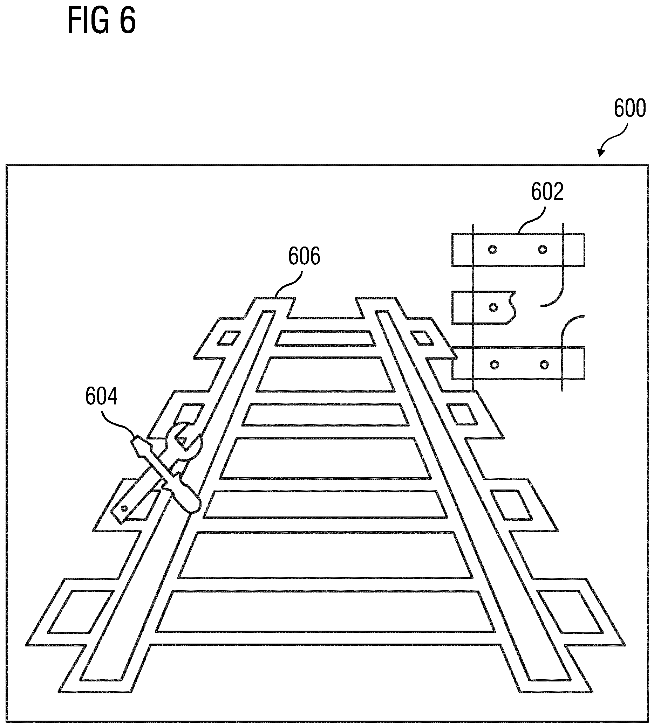

Figure 6 depicts an implementation example of the above-mentioned system for a railway track management. In reference to Figure 6, virtual anchors 602 and 604 have been shown to be placed on rail for inspection and maintenance. The proposed system can be used in rail line inspection. During the inspection, the inspection engineer can create different anchors based on the rail condition in each location like rail defects. When the service technician arrives, he can easily locate the faults via the anchors without having to rely on non-intuitive maps. Hence an offline collaborative environment with specific goals is created to monitor, maintain, and repair the rail deterioration.

In another embodiment, in case of industrial plant augmentation anchors may be utilized to access industrial sites by multiple users. The proposed system can be used to augment plant sites with additional information. For example, in an oil and gas plant site, users can place various hazard signs anchors near chemical reactors, toolbox anchors near tools houses, and anchors for showing the percentage of the oil present in the tank. This can help employees or visitors to efficiently and safely navigate hazardous industries. Those of ordinary skilled in the art will appreciate that the hardware depicted in FIG 2 may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

The innovative aspects of the proposed identification (ID) system include the capability to establish and position anchors independently of surrounding environmental background data. This means that placed anchors can be accurately located regardless of changes in the background objects. Additionally, the system allows for the creation and positioning of anchors from various angles and directions, accommodating multiple devices in a collaborative environment. Users can update placed anchors, enhancing the overall immersive experience.

Further advantages of the proposed approach include the placement of anchors in the scene without relying on point cloud data for distances exceeding a few meters from the camera. This enables anchor detection from all angles while minimizing storage and transmission requirements by eliminating the need for point cloud data. The system leverages geofencing to download nearby models and locations through notifications when the user or device enters the geofenced area. Moreover, the technique supports the use of alternative location identifiers such as building ID, name, or famous locations, as long as GPS coordinates are available. This flexibility allows for applications in both indoor and outdoor settings, with examples like using a QR code or building name to store the GPS location.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples.

Other variations can be deducted by those skilled in the art without leaving the scope of protection of the claimed invention.

REFERENCE NUMERALS

| 100 | method |
| 110 | step |
| 120 | step |
| 130 | step |
| 140 | step |
| 150 | step |
| 160 | step |
| 200 | system |
| 202 | bus |
| 204 | processing unit |
| 206 | memory |
| 208 | user device |
| 210 | memory unit |
| 212 | input device |
| 214 | output device |
| 216 | location management unit |
| 302A | first device |
| 302B | second device |
| 304 | target object |
| 306 | background object |
| 308 | background object |
| $\varphi$ | latitude in radians |
| $\lambda$ | longitude in radians |
| R | radius of earth (mean R= 6371Km) |
| $\theta$ | bearing angle |
| $\varnothing_1$ | angle between north pole and the point 1 |
| $\varnothing_2$ | angle between north pole and the point |
| 500 | example of a use case |
| 502 | first device |
| 504 | second device |

| 506 | target device |
| 600 | implementation example |
| 602 | first anchor |
| 604 | second anchor |

**Claims**

1. A method (100) for generating a virtual position anchor for a real-time object, the method (100) comprising:

   in a creating phase:

   receiving, by a processor (204), an instruction to generate the virtual position anchor at a virtual position that is globally fixed near a real-time object;
   receiving, by the processor (204), sensor data from a user device relating to the virtual position anchor;
   calculating, by the processor (204), the virtual position based on the data received from the user device;
   generating, by the processor (204), one or more holo-projection of a virtual object at the calculated virtual position;

   in a viewing phase:

   transmitting, by a processor (204), first display data to a first display device comprising a display configured to overlay digital information onto the user's view of the physical world, the first display data causing the first display device to display the one or more holo-projection to the first user at the virtual position anchor at the virtual position of the real time object; and
   transmitting, by a processor (204), second display data to cause a second display device to display the one or more holo-projection to a second user at the virtual position anchor at the virtual location of the real time object.

2. The method (100) as claimed in claim 1, the method further comprises, in a creating phase, storing, in a memory unit, the virtual position anchor using the virtual position.

3. The method (100) as claimed in claim 2, wherein, in the creating phase, the data from the user device relating to the virtual position anchor comprises of a GPS location of the user device, a cardinal bearing and a depth information from at least one of the sensors of the user device.

4. The method (100) as claimed in claim 3, wherein the data relating to the data from the user device is used to calculate the virtual position near a real-time object using a spherical law of cosines.

5. The method (100) as claimed in claim 4, wherein the virtual position near the real-time object is calculated using a latitude parameter $\varphi_1$ and a longitude parameter $\lambda_1$ of the position of the user device, a distance to the virtual position d, radius of the earth R and a bearing angle $\theta$, the virtual position being the geo-coordinates.

6. The method (100) as claimed in claim 5, wherein the geo-coordinates of the virtual position comprise of a target latitude parameter and a target longitude parameter.

7. The method (100) as claimed in claim 1, wherein the virtual position anchor further comprises of an additional information associated with the real-time object.

8. The method (100) as claimed in claim 6, wherein the additional information is a status of the real-time object.

9. The method (100) as claimed in claim 1, wherein the virtual position is globally fixed to a position that is fixed in a three-dimensional coordinate space overlaid upon the real-world three-dimensional environment.

10. The method (100) as claimed in claim 1, wherein, in the viewing phase, an orientation of the virtual position anchor is configured to be changed based on an orientation input by one of a first user using a first device or a second user using a second device.

11. A computer program product, comprising computer program code which, when executed by a processor (204), cause the processor (204) to carry out the method (100) of one of the claims 1 to 10.

12. A computer-readable medium comprising a computer program product comprising computer program code which, when executed by a processor (204), cause the processor (204) to carry out the method (100) of one of the claims 1 to 10.

FIG 1

100

100A

110

120

130

140

150

100B

160

FIG 2

# FIG 3A

# FIG 3B

# FIG 4A

# FIG 4B

FIG 5

## FIG 6

EP 4 610 786 A1

**EUROPEAN SEARCH REPORT**

Europäisches Patentamt
European Patent Office
Office européen des brevets

Application Number

EP 24 15 9990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/124143 A1 (RAFKIND NICHOLAS [US] ET AL) 21 April 2022 (2022-04-21) * paragraph [0001] - paragraph [0084] * ----- | 1-12 | INV. G06F3/01 G06T19/00 |
| A | US 2018/330542 A1 (BHARTI HARISH [IN] ET AL) 15 November 2018 (2018-11-15) * paragraph [0016] - paragraph [0053] * ----- | 1-12 | |

**TECHNICAL FIELDS SEARCHED (IPC)**

G06F
G06T

The present search report has been drawn up for all claims

| Place of search | Date of completion of the search | Examiner |
|---|---|---|
| Munich | 15 July 2024 | Nash, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**EP 4 610 786 A1**

## ANNEX TO THE EUROPEAN SEARCH REPORT
## ON EUROPEAN PATENT APPLICATION NO.

EP 24 15 9990

15-07-2024

| Patent document cited in search report | Publication date | Patent family member(s) | | Publication date |
|---|---|---|---|---|
| US 2022124143 A1 | 21-04-2022 | US | 2022124143 A1 | 21-04-2022 |
| | | US | 2023106709 A1 | 06-04-2023 |
| US 2018330542 A1 | 15-11-2018 | NONE | | |

EPO FORM P0459